# DEMANDE DE BREVET EUROPEEN

(11) **EP 1 936 527 A1**
(43) Date de publication de la demande: **25.06.2008**
(21) Numéro de dépôt: 06301265.2
(22) Date de dépôt: 18.12.2006
(51) Int. Cl.: G06F 21/00, G06F 21/02

(54) **Procédé permettant de faire varier le nombre d'exécution de contre-mesures dans un code exécuté**

(71) Demandeur: GEMPLUS, 13420 Gémenos (FR)
(72) Inventeur: Guterman, Pascal, 13360 Roquevaire (FR)

(57) **Abrégé**

La présente invention concerne le domaine de la sécurisation et de la protection de l'exécution d'un code source par une unité de traitement d'un équipement électronique, ainsi que les dispositifs associés, par exemple des cartes à puce.

L'invention présente un procédé pour la sécurisation de l'exécution d'un code source par une unité de traitement d'un équipement électronique, le procédé comprenant des étapes d'insertion d'opérations factices, dans lequel une partie des opérations factices ne s'exécute pas dans leur intégralité.

## Description

La présente invention concerne le domaine de la sécurisation et de la protection de l'exécution d'un code informatique par une unité de traitement d'un équipement électronique, ainsi que les dispositifs associés, par exemple des cartes à puce.

Les cartes à puce font l'objet de nombreuses tentatives de piratage, par des attaques actives ou passives. Une attaque active consiste à injecter une faute pour perturber physiquement le circuit intégré de la puce en vue de modifier le comportement de cette dernière et de dérouter le code logiciel vers un autre type d'exécution.

En contraste, pour une attaque passive, par exemple par canal latéral (side-channel), le pirate tente de réaliser une analyse statistique de grandeurs mesurables de la puce telles que le courant d'alimentation électrique ou les radiations électromagnétiques émises par la puce, afin de maîtriser ou déduire les tâches d'exécution de la puce.

Afin de palier à de telles attaques, il est connu d'utiliser et d'insérer, lors de l'exécution d'une commande, des délais aléatoires, c'est-à-dire des délais dont la durée est choisie de façon aléatoire ou pseudo-aléatoire, comme contre-mesure à de telles attaques afin de les rendre plus complexes à réaliser. En effet, la présence de ces délais aléatoires rend délicate la détermination de l'instant auquel la faute doit être injectée par le pirate lors de l'exécution d'un processus et empêche le pirate de se synchroniser pour réaliser des mesures par canal latéral.

Dans la présente description et dans les revendications, on entendra par « code source », une séquence d'instructions exécutables formant tout ou partie d'une application informatique.

De la même façon, on entendra par « code exécuté », une séquence d'instructions réellement jouées par le processeur lors de l'exécution de tout ou partie de l'application correspondante.

Il est connu d'insérer, dans le code source, des portions de code dont le résultat n'est pas nécessaire à l'exécution normale du code en question. Ces portions de codes sont généralement appelées « leurres ». Ces leurres ont comme particularité, lors d'une analyse side-channel, de ressembler à de vraies séquences importantes de code.

De telles contre-mesures (leurres ou délais aléatoires) ont comme objectif commun de rendre les attaques extérieures plus difficiles en empêchant le pirate de comprendre et/ou de prédire avec précision l'exécution du programme.

Il est fréquent d'insérer de telles contre-mesures à de multiples emplacements temporels durant l'exécution d'un code source par la puce. Notamment, il a été pensé de sécuriser l'exécution d'opérations délicates ou à risques (telles qu'une lecture/écriture en mémoire, un calcul cryptographique, un algorithme de prise de décision) avec de telles contre-mesures. En effet, ces opérations délicates étant les plus sollicitées par les pirates, il apparaît judicieux d'insérer de nombreuses contre-mesures tout au long de l'exécution du code source, avant et pendant de telles opérations délicates.

Un inconvénient de cette solution est qu'il est possible de repérer la présence de ces contre-mesures lors d'analyses par canal latéral, malgré les efforts pour les rendre le moins visible possible. Ces contre-mesures étant généralement positionnées près des séquences critiques de code source, leur détection peut permettre de caler les attaques au plus près des points cruciaux.

La présente invention vise à résoudre cet inconvénient en proposant de faire varier le nombre de contre-mesures réellement accomplies d'une exécution à l'autre.

A cet effet, la présente invention a tout d'abord pour objet un procédé pour la sécurisation de l'exécution d'un code source par une unité de traitement d'un équipement électronique, ce procédé comprenant des étapes d'insertion d'opérations factices, une partie des opérations factices ne s'exécutant pas dans leur intégralité. Dans la suite de cette description, ces opérations factices particulières seront appelées des « contre-mesures partielles ».

Le nombre de contre-mesures partielles peut varier entre deux exécutions du programme en question. Ces variations peuvent se faire suivant des règles de calcul ou de manière imprédictible. Une manière possible d'avoir une information imprédictible est de la générer aléatoirement.

Pour arriver à ce résultat, l'invention prévoit un découpage des contre-mesures en deux parties, une partie que l'on appellera partie introductive, et une partie que l'on appellera corps. Les contre-mesures qui ne s'exécutent que partiellement, n'exécutent que la partie introductive.

De préférence, une fois le nombre de contre-mesures partielles défini, le choix des contre-mesures devenant partielles peut se faire suivant des règles définies ou de manière imprédictible.

D'autres caractéristiques et avantages de l'invention ressortiront de la description qui en est faite ci-après, à titre indicatif et nullement limitatif, en référence aux dessins annexés dans lesquels:
- La figure 1 représente un exemple de portion de code source contenant des contre-mesures selon l'invention ;
- Les figures 2 et 3 représentent le code réellement exécuté, issu de la même portion de code que dans la figure 1, mais lors de deux exécutions distinctes.

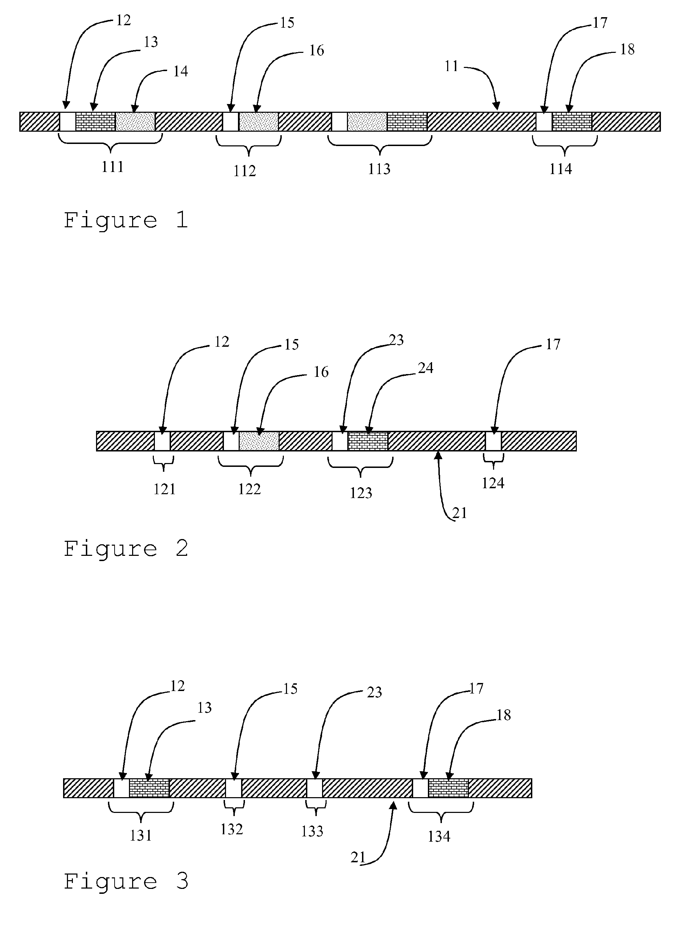

La figure 1 représente un exemple portion de code source contenant des contre-mesures selon l'invention. Cette figure montre un code source 11 dans lequel a été insérée une contre-mesure 112. Cette dernière comporte un corps 16 précédé par une partie introductive 15. De même, une deuxième contre-mesure 114 comporte un corps 18 précédé de sa partie introductive 17. Une troisième contre-mesure 111 particulière est composée de deux corps 13 et 14, et de leur partie introductive 12. Cette figure comporte en outre une quatrième contre-mesure 113, de composition identique à la contre-mesure 111.

Dans cet exemple de réalisation, quatre contre-mesures 111 à 114 sont donc insérées dans le code source 11. Conformément à l'invention, ces contre-mesures sont divisibles en deux parties. On notera que la partie introductive est toujours exécutée par l'application. Afin d'empêcher le repérage des contre-mesures par un éventuel attaquant, il convient donc de réduire ces parties introductives au minimum en terme de taille.

Dans un mode de réalisation préféré, on limitera les parties introductives à l'appel d'instructions déjà appelées régulièrement au cours du code. Ces instructions courantes sont par exemple des modifications de registres de travail du microprocesseur, ou des modifications de variables internes. Le but est que, lors d'une analyse par « side channel » les parties introductives des contre-mesures ne se distinguent pas du code exécuté.

Dans ce mode de réalisation, nous pouvons voir des contre-mesures particulières 111 et 113. Ces contre-mesures ont la particularité d'avoir plusieurs corps 13 et 14 pour une seule partie introductive 12. Chacun des corps 13 et 14 est une contre-mesure indépendante, par exemple un délai ou un leurre. Ainsi, la partie introductive 12 va décider d'exécuter ou non le corps, mais va aussi choisir lequel des corps disponibles va être exécuté.

La figure 2 représente une exécution du code de la figure 1 dans lequel le nombre de contre-mesures à activer est de deux. Cette figure montre un code exécuté 21 dans lequel sont incluses : une contre-mesure 122 comportant un corps 16 et une partie introductive 15, une seconde contre-mesure 123 comportant un corps 24 et sa partie introductive 23, ainsi que deux autres contre-mesures particulières, une contre-mesure 121 ne comportant qu'une partie introductive 12, et une contre-mesure 124 ne comportant que la partie introductive 17. Dans cette exécution, nous pouvons constater que les contre-mesures 121 et 124 ne se sont exécutées qu'en partie, en fait seules leurs parties introductives ont été exécutées. La contre-mesure 122 s'est exécutée dans son intégralité, et la contre-mesure 123 s'est exécutée avec un des corps possibles.

La figure 3 représente une autre exécution du code de la figure 1 dans lequel le nombre de contre-mesures à activer est de deux. Cette figure montre un code exécuté 21 dans lequel sont incluses une première contre-mesure 131 comportant un corps 13 et une partie introductive 12, une deuxième contre-mesure 134 comportant un corps 18 et sa partie introductive 17, ainsi que deux autres contre-mesures particulières, une contre-mesure 132 ne comportant qu'une partie introductive 15, et une contre-mesure 133 ne comportant qu'une partie introductive 23. Dans cette exécution, les contre-mesures 132 et 133 ne se sont exécutées qu'en partie, en fait seule leur partie introductive a été exécutée. La contre-mesure 134 s'est exécutée normalement, et la contre-mesure 131 s'est exécutée avec un des corps possibles.

En regardant les figures 2 et 3, on constatera que, d'une exécution à l'autre, l'ensemble des contre-mesures peut changer, que ce soit de place dans le code, de durée, et même de nature. Cet ensemble de contre-mesures va rendre l'analyse du code en side-channel beaucoup plus difficile. De plus, il sera extrêmement complexe de trouver des points de calage tant les exécutions consécutives d'un même code vont être différentes.

Dans un mode de réalisation, les contre-mesures utilisées sont des délais aléatoires (« random-delays » en anglais) et abrégés par Rnd par la suite. Cette fonction peut être divisée en deux :
- un partie introductive, qui contient l'appel de la fonction, d'éventuels traitements mémoire,
- un corps de fonction qui contient l'activation du générateur d'aléa, et le tirage réel de l'aléa.

Lors de la création du code, les programmeurs ont pris soin d'insérer un grand nombre de Rnd un peu partout dans le code. Par exemple, nous insérerons environ trois fois plus de Rnd que dans un code (dit « standard ») protégé contre les attaques « side channel », ne mettant pas en oeuvre la présente invention. Ainsi, en n'exécutant intégralement que un tiers de ces Rnd, le code ainsi protégé sera, lors de son exécution, quasiment aussi rapide que ce même code protégé par des Rnd classiques, tous intégralement exécutés, mais avec une sécurité grandement accrue.

Dans un mode de réalisation, lors de l'initialisation du programme, deux valeurs aléatoires sont tirées :
- Une valeur « nbr » qui va permettre de définir le nombre de Rnd qui s'exécuteront dans leur intégralité ;
- Une valeur « wch » qui va permettre de désigner quels Rnd s'exécutent dans leur intégralité.

Ainsi, lors de l'exécution du code, à chaque exécution d'un Rnd, la fonction Rnd elle-même, pendant l'exécution de sa partie introductive, teste les valeurs wch et nbr, et décide si elle va laisser le corps de la fonction s'exécuter ou non.

Une autre mode de réalisation de l'invention concerne les contre-mesures matérielles. Une utilisation connue de contre-mesures est de réaliser des activations factices d'organes périphériques tels les accélérateurs de cryptographie (AC), ou les générateurs de nombres aléatoires. L'invention propose de placer un grand nombre de sites d'activations potentielles de l'AC, assimilables à des parties introductives de contre mesures. Seuls certains emplacements verront s'activer l'AC, assimilable au corps de la contre-mesure.

Dans un mode préféré de réalisation, il est fait en sorte de ne pas pouvoir prédire d'une fois sur l'autre, lesquels de ces emplacements seront activés.

Dans un mode préféré de réalisation, l'invention sera mise en oeuvre dans un objet portable tel qu'une carte a puce.

## Revendications

1. Procédé pour la sécurisation de l'exécution d'un code source (11) par une unité de traitement d'un équipement électronique, ledit procédé comprenant des étapes d'insertion d'opérations factices (111, 112,113,114), **caractérisé en ce qu'**une partie desdites opérations factices ne s'exécute pas dans leur intégralité.

2. Procédé selon la revendication 1, **caractérisé en ce que** le nombre d'opérations factices ne s'exécutant pas dans leur intégralité est variable entre deux exécutions dudit code informatique.

3. Procédé selon la revendication 2, **caractérisé en ce que** ledit nombre d'opérations factices ne s'exécutant pas dans leur intégralité est recalculé à chaque exécution dudit code informatique.

4. Procédé selon la revendication 2 ou 3, **caractérisé en ce que** ledit nombre variable d'opérations factices ne s'exécutant pas dans leur intégralité varie de manière imprédictible d'une exécution à l'autre dudit code informatique.

5. Procédé selon l'une quelconque des revendications précédentes, **caractérisé en ce que** lesdites opérations factices comprennent une partie introductive et un corps.

6. Procédé selon la revendication 5, **caractérisé en ce que** seule la partie introductive des opérations factices ne s'exécutant pas dans leur intégralité, est exécutée.

7. Procédé selon l'une des revendications 1 à 6, **caractérisé en ce que** le choix des opérations factices ne s'exécutant pas dans leur intégralité est redéfini à chaque exécution dudit code informatique.

8. Procédé selon l'une des revendications 1 à 6, **caractérisé en ce que** le choix des opérations factices ne s'exécutant pas dans leur intégralité est imprédictible.

9. Objet portable **caractérisé en ce qu'**il met en oeuvre le procédé selon les revendications 1 à 8.
